# EUROPÄISCHE PATENTSCHRIFT

(11) **EP 1 391 344 B1**
(45) Veröffentlichungstag und Bekanntmachung des Hinweises auf die Patenterteilung: **30.12.2009**
(21) Anmeldenummer: 03017573.1
(22) Anmeldetag: 07.08.2003
(51) Int. Cl.: B60N 2/02

(54) **Bedienanordnung für einen Fahrzeugsitz**
Operating arrangement for a vehicle seat
Agencement de commande pour un siège de véhicule

(30) Priorität: 23.08.2002 DE 10238656
(43) Veröffentlichungstag der Anmeldung: 25.02.2004
(73) Patentinhaber: Daimler AG, 70327 Stuttgart (DE)
(72) Erfinder: Berthet, Alain, 71093 Weil im Schönbuch (DE); Bihaule, Bernd, 71134 Aidlingen (DE); Faisst, Frank, 76593 Gernsbach (DE); Mohrmann, Horst, 71069 Sindelfingen (DE); Schäfer, Martin, 71640 Ludwigsburg (DE); Zygan, Andreas, Dr., 76316 Malsch (DE)
(74) Vertreter: JENSEN & SON

(56) Entgegenhaltungen:
- WO-A-02/096697
- DE-A1- 2 846 927
- DE-A1- 3 517 505
- DE-U1- 9 400 606
- US-A1- 2002 050 730
- PATENT ABSTRACTS OF JAPAN Bd. 1998, Nr. 01, 30. Januar 1998 (1998-01-30) -& JP 09 245550 A (YAZAKI CORP), 19. September 1997 (1997-09-19)
- PATENT ABSTRACTS OF JAPAN Bd. 2000, Nr. 09, 13. Oktober 2000 (2000-10-13) -& JP 2000 153730 A (FURUKAWA ELECTRIC CO LTD:THE), 6. Juni 2000 (2000-06-06)

## Beschreibung

Die Erfindung betrifft eine Bedienanordnung für einen Fahrzeugsitz der im Oberbegriff des Patentanspruchs 1 angegebenen Art.

In der JP 09 245550 A, der DE 28 46 927 A und der JP 2000 153730 A sind Bedienanordnungen für Fahrzeugsitze gezeigt, bei welchen jeweils die Betätigungselemente auf der oberen oder der seitlichen Oberfläche eines längs und seitlich des Sitzkissens erstreckenden Handlaufs teilweise versenkt angeordnet sind.

Die US 2002/0050730 A und die DE 35 17 505 A zeigen jeweils eine Bedienungsanordnung für Fahrzeugsitze, bei welcher die Betätigungselemente in einer Seite des Sitzkissens integriert sind.

Des Weiteren ist in der DE 94 00 606 U eine Bedienungsanordnung für Fahrzeugsitze bekannt, bei welcher die Betätigungselemente in dem Schaumstoff einer der seitlichen Abstützungen integriert sind.

Schließlich ist aus der DE 44 05 566 A1 bereits eine Bedienanordnung mit einem länglichen Bedienfeld als bekannt zu entnehmen, welches abgewinkelt ist und sich seitlich neben dem Sitzkissen und der Rückenlehne des Fahrzeugsitzes erstreckt. Das Bedienfeld.umfasst mehrere im Abstand voneinander angeordnete Betätigungselemente zur Sitzeinstellung, welche durch Ertasten ihrer Lage oder Gestalt zu unterscheiden sind. Dabei ragen die Betätigungselemente seitlich von dem Bedienfeld ab und sind durch eine unterschiedliche Form einer bestimmten Funktion zuzuordnen.

Der Erfindung liegt die Aufgabe zugrunde, einen Fahrzeugsitz der eingangs genannten Art zu schaffen, bei welchem wenigstens ein Betätigungselement besonders ergonomisch und benutzerfreundlich zu betätigen ist.

Die erfindungsgemäße Lösung dieser Aufgabe ergibt sich aus den Merkmalen des Hauptanspruchs. Vorteilhafte Ausgestaltungen der Erfindung sind den übrigen Ansprüchen zu entnehmen.

Bei dem Fahrzeugsitz ist das Bedienfeld als ein der Länge nach abtastbarer Handlauf ausgebildet, bei dem alle Betätigungselemente des Handlaufes weitgehend in diesem versenkt angeordnet sind. Durch diese Ausbildung des Bedienelements als Handlauf und die versenkte Anordnung der Betätigungselemente darin kann die Hand des Sitzinsassen sehr schnell entlang des Handlaufes bewegt werden, ohne dass die Betätigungselemente störend aus dem Bedienelement herausragen. Dabei ist die Zuordnung von bestimmten Funktionen zu den entsprechenden Betätigungselementen durch deren unterschiedliche Gestalt sehr gut gewährleistet. Die unterschiedliche Gestaltung der Betätigungselemente wird dabei durch eine unterschiedliche Formgebung, Materialien, Oberflächen, Materialfestigkeiten oder dgl. erreicht.

Durch die versenkte Anordnung der Betätigungselemente in dem Handlauf ist außerdem eine Fehlbedienung besser vermieden, da die entlang des Handlaufs geführte Hand nicht gegen erhaben abragende Betätigungselemente stoßen kann.

Weitere Vorteile, Merkmale und Einzelheiten der Erfindung ergeben sich aus der nachfolgenden Beschreibung eines bevorzugten Ausführungsbeispieles sowie anhand der Zeichnungen; diese zeigen in
- Fig.1: eine schematische Perspektivansicht auf einen Schwingsitz eines Nutzfahrzeuges mit der Bedienanord-nung nach der Erfindung;
- Fig.2,3: jeweils eine gegenüber Fig.1 vergrößerte, ausschnittsweise und schematische Perspektivansicht auf das als Handlauf ausgebildete Bedienfeld nach der Erfindung;
- Fig.4: eine schematische, ausschnittsweise und vergrößerte Schnittansicht durch ein Betätigungselement des Handlaufs entlang der Linie IV-IV in Fig.3;
- Fig.5: eine Vorderansicht auf den Schwingsitz gemäß den Figuren 1 bis 4, bei dem der seitlich des Sitzkissens angeordnete Handlauf in einen vor dem Sitzkissen verlaufenden Längenbereich übergeht; und in
- Fig.6: eine Draufsicht auf ein weiteres Betätigungselement des erfindungsgemäßen Bedienfeldes.

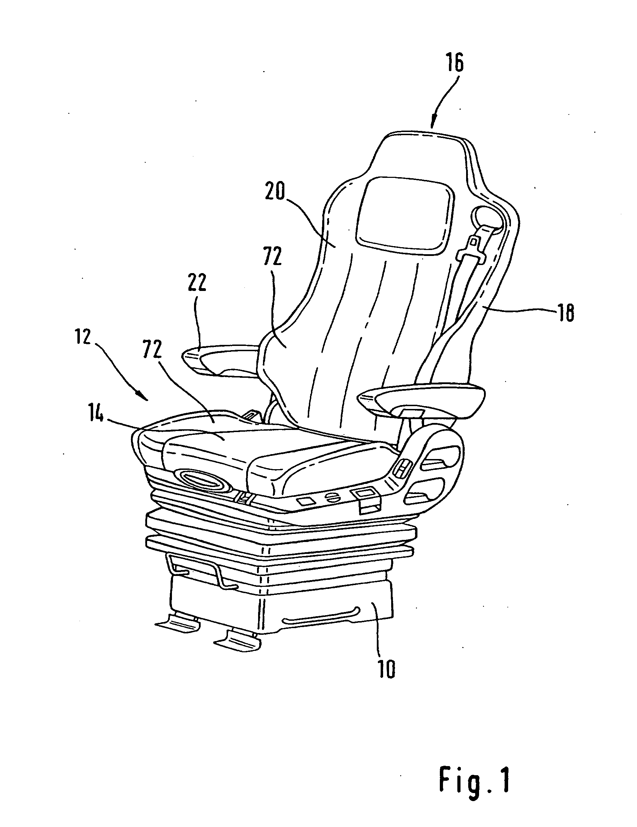

In Fig. 1 ist in schematischer Perspektivansicht ein Schwingsitz eines Nutzfahrzeuges, insbesondere eines Lastkraftwagens dargestellt, welcher ein fahrzeugfestes Sitzuntergestell 10 umfasst. Ein Sitzteil 12 mit einem Sitzkissen 14 ist über eine beispielsweise hydraulisch oder pneumatisch betriebene Feder- und/oder Dämpfereinheit höhenverstellbar am Sitzuntergestell 10 abgestützt. An dem Sitzteil 12 ist eine Rückenlehne 16 schwenkbar angelagert, welche im wesentlichen ein rückwärtiges Tragteil 18, ein Polster 20 und seitliche Armlehnen 22 umfasst. Von einer Bedienungsanordnung ist ein als der Länge nach abtastbarer Handlauf 24 gestaltetes, im weiteren noch näher erläutertes längliches Bedienfeld erkennbar, das sich hier sowohl seitlich neben dem Sitzkissen 14 des Fahrzeugsitzes als auch vor dem Sitzkissen 14 erstreckt. In dem hier gezeigten Ausführungsbeispiel verläuft der Handlauf 24 über einen erheblichen Teilbereich seiner Länge etwa horizontal auf Höhe des unteren Endes des Sitzkissens. In einem hinteren Teil nahe der Rückenlehne 16 ist der Handlauf 16 nach oben abgewinkelt. Der Handlauf 24 umfasst eine Mehrzahl von im Abstand zueinander angeordneten Betätigungselementen 26-36, welche durch Ertasten ihrer Lage oder Gestalt voneinander zu unterscheiden sind. Die unterschiedliche Gestaltung der Betätigungselemente wird dabei durch eine unterschiedliche Formgebung, Materialien, Oberflächen, Materialfestigkeiten oder dgl. erreicht.

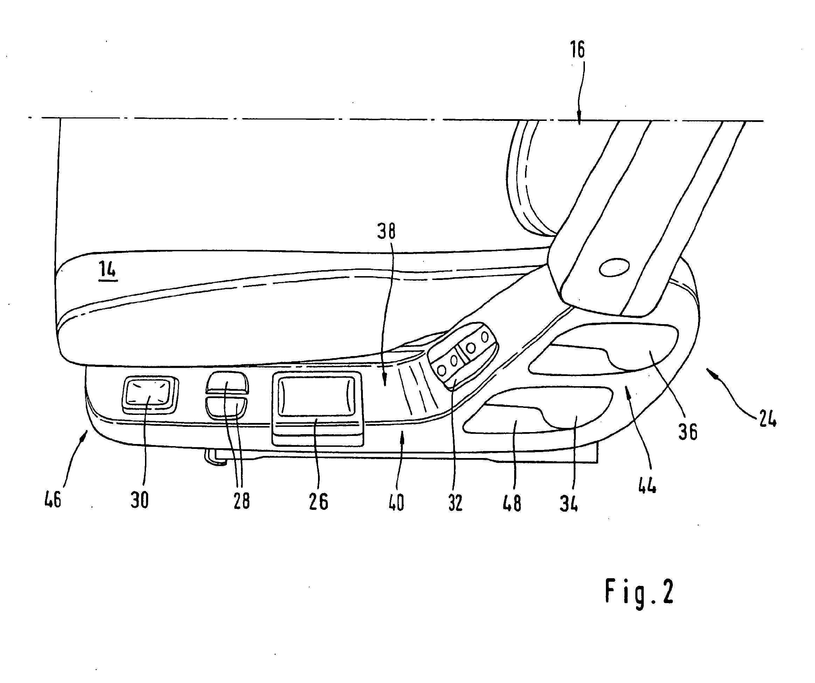

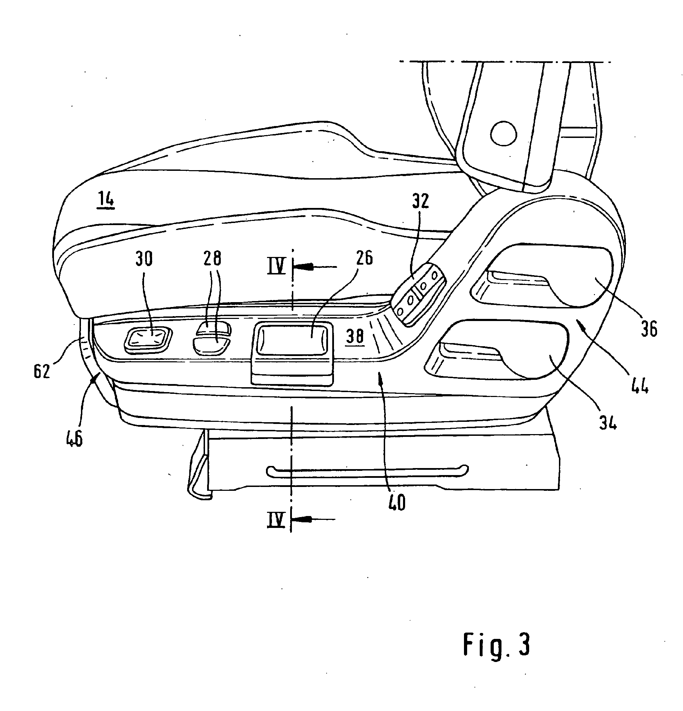

In Zusammenschau mit den Figuren 2 und 3, in welchen jeweils eine gegenüber Fig. 1 vergrößerte, ausschnittsweise und schematische Perspektivansicht auf das Bedienfeld 24 dargestellt ist, wird ersichtlich, dass sich der Handlauf 24 über die gesamte Länge des Sitzkissens erstreckt und dass alle Betätigungselemente 26-36 des Handlaufes 24 weitgehend in diesem versenkt angeordnet sind. Der Handlauf 24 hat eine nach oben gewandte Tastbahn 38 und eine vom Sitzkissen 14 abgewandte seitliche Tastbahn 40, wobei die nach oben gewandte Tastbahn 38 von vorne gesehen seitlich geneigt und in Richtung nach außen abfallend verläuft, wodurch diese mit der seitlichen Tastbahn 40 einen stumpfen Winkel einschließt. Durch den im Übergangsbereich vom Sitzkissen 14 zur Sitzlehne 16 nach oben abgewinkelten Handlauf 24 ist ein nach oben abgewinkelter Seitenbereich 44 der seitlichen Tastbahn 40 gebildet, welcher zu einem großformatigen Teilbedienfeld mit den Betätigungselementen 34 und 36 verbreitert ist. Die nach oben gewandte Tastbahn 38 weist über ihre Länge sowohl im horizontal verlaufenden Abschnitt des Handlaufs 24 wie auch im nach oben abgewinkelten Abschnitt des Handlaufs 24 eine im wesentlichen konstante Breite auf.

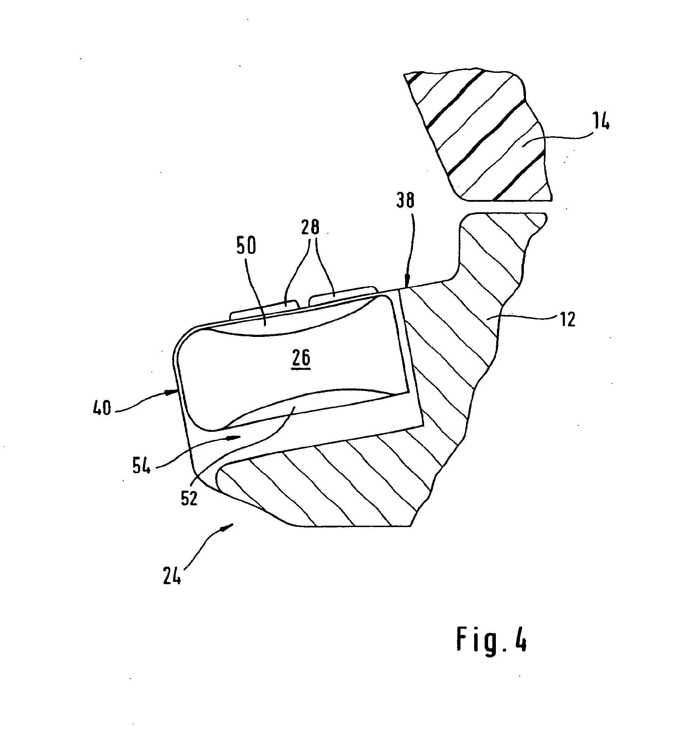

Im einzelnen umfasst der Handlauf 24 eine im Zusammenhang mit Fig.4 noch näher erläuterte griffgünstig im Handlauf 24 angeordnete Griffplatte 26, welche über Eck in der nach oben gewandten und der seitlichen Tastbahn 38,40 angeordnet ist und zur Höheneinstellung des Schwingsitzes dient. Unter griffgünstig im Handlauf 24 angeordnet ist dabei folgendes zu verstehen:
Sitzt ein Insasse auf gewöhnlich vorgesehene aufrechte Weise in dem Fahrzeugsitz und lässt er seinen Arm in Fallrichtung gerade nach unten hängen, so befinden sich seine Hand in unmittelbarer Zugriffsnähe zu der Griffplatte 26. Mit anderen Worten soll das Betätigungselement derjenigen Funktion, welche am häufigsten bei einem Sitz gebraucht wird so angeordnet sein, dass die Hand - des im Ruhezustand ohne Kraftaufwand hängenden Arms des Sitzinsassen - auf kürzestem Weg das Betätigungselement 26 erreichen kann. Bei einem Schwingsitz ist die am häufigsten benutze Funktion im allgemeinen die Sitzhöheneinstellung.

Vor der Griffplatte 26 ist in die nach oben gewandte Tastbahn 38 ein Schalterelement 28 für die Sitzheizung oder dgl. integriert. In diesem Bereich kann auch ein Schalterelement für die Heizung und Klimatisierung der Fahrerkabine vorgesehen sein.

Nahe des Eckbereichs 46 des Handlaufes 24, in welchem dieser von seinem seitlich des Sitzkissens 14 verlaufenden Längenbereich in den vor dem Sitzkissen 14 verlaufenden Längenbereich übergeht, ist ein Schalterelement 30 zur Schnellabsenkung des hier pneumatisch gefederten Sitzes in der nach oben gewandten Tastbahn 38 angeordnet. Beim Aussteigen aus dem Fahrerhaus stützt sich der Insasse im allgemeinen in einem oberhalb des Schalterelementes 30 angeordneten Bereich des Sitzkissens 14 ab, so dass der Insasse vor dem Aussteigen das Schalterelement 30 zur Schnellabsenkung mit der sich bereits in diesem Bereich befindenden Hand sehr schnell und ergonomisch erreicht.

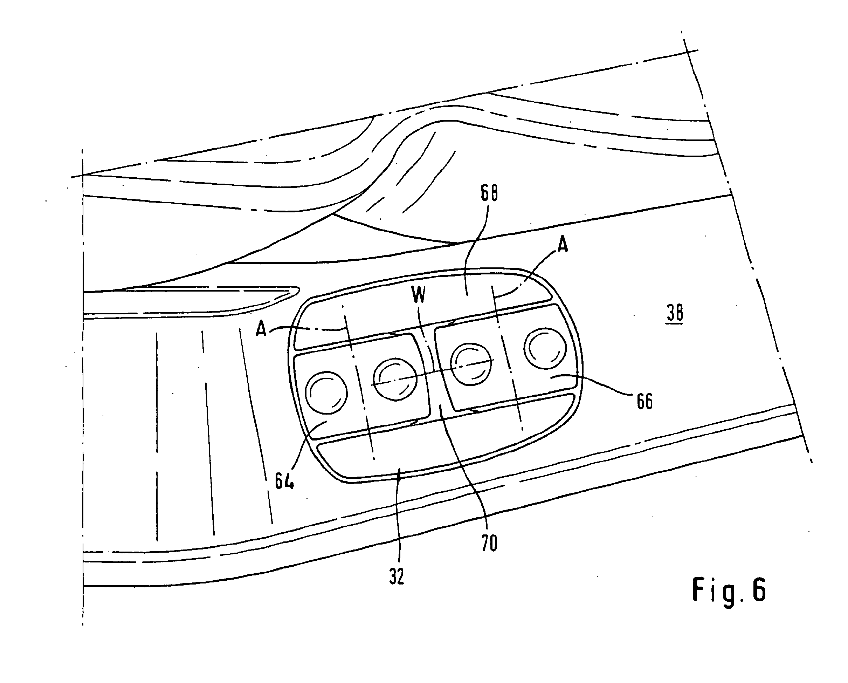

Im nach oben abgewinkelten Längenabschnitt des Handlaufs 24 ist in der nach oben gewandten Tastbahn ein Schalterblock 32 mit mehreren Schaltelementen vorgesehen, der unter Bezugnahme auf Fig.6 noch detailliert erläutert werden wird. Schließlich sind in den Figuren 2 und 3 im großformatigen Teilbedienfeld 44 zwei um eine etwa horizontale Achse verschwenkbare Griffklappen 34,36 angeordnet, welche der Sitzneigungseinstellung und der Rückenlehnenneigungseinstellung zugeordnet sind. Die Höhenerstreckung der innerhalb einer zugeordneten Mulde angeordneten Griffklappen 34,36 ist im hinteren Endbereich gegenüber der Höhenerstreckung im vorderen Endbereich deutlich vergrößert, so dass unterhalb des jeweiligen vorderen Teilbereichs eine Eingriffsmulde 48 zur Betätigung gebildet ist.

In Fig.4 ist eine schematische, ausschnittsweise und vergrößerte Schnittansicht durch den Handlauf 24 des Sitzteils im Bereich der griffgünstig im Handlauf 24 angeordneten Griffplatte 26 entlang der Linie IV-IV in Fig.3 dargestellt. In Fahrzeuglängsrichtung gesehen vor der Griffplatte 26 ist das Schalterelement 28 für die Sitzheizung angeordnet. Es ist ersichtlich, dass die Betätigungselemente des Handlaufes 24 im wesentlichen in diesem versenkt angeordnet sind, so dass die Hand ohne großen Widerstand entlang des Bedienfeldes geführt werden kann. Die Griffplatte 26 ist über Eck in der nach oben gewandten und der seitlichen Tastbahn 38,40 angeordnet und weist zur besseren Erkennung und Handhabbarkeit ober- und unterseitig eine Eingriffsvertiefung 50,52 auf, wobei das Anheben bzw. Absenken der Griffplatte 26 zu einem Anheben bzw. Absenken des Sitzes führt. Um die Eingriffsvertiefung 52 an der Unterseite der Griffplatte 26 erreichen zu können, ist aus dem Handlauf 24 eine Eingriffsmulde 54 ausgespart.

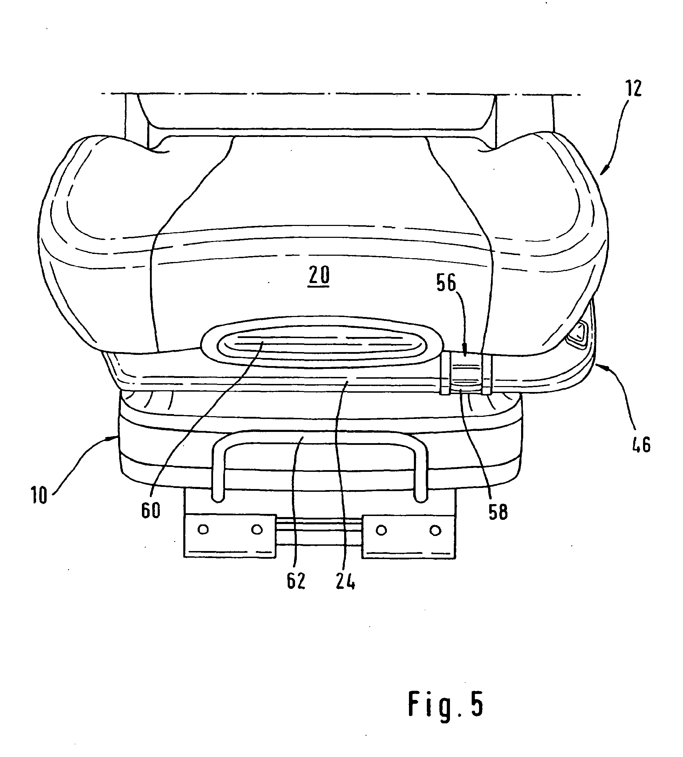

In Fig.5 ist der Schwingsitz in Vorderansicht dargestellt, bei dem der Handlauf 24 von seinem seitlich des Sitzkissens 14 verlaufenden Längenbereich unter weicher Rundung in einen vor dem Sitzkissen 14 verlaufenden Längenbereich übergeht. Innerhalb des vor dem Sitzkissen 14 verlaufenden Längenbereichs des Handlaufs 24 ist ein weiteres Betätigungselement 56 zur Einstellung der Sitzdämpfung integriert, wobei die Dämpfung durch Anheben bzw. Absenken des Betätigungselements 56 verändert wird. Das Betätigungselement 56 umfasst einen stegartigen Griffabschnitt 58, der nach vorne lediglich soweit reicht, dass das Betätigungselement 56 weitgehend versenkt in dem Handlauf 24 angeordnet ist. Außerdem ist das Betätigungselement 56 relativ schmal bemessen, so dass die Hand ohne großen Widerstand entlang des Bedienfeldes geführt werden kann. Oberhalb des Handlaufs 24 ist ein weiteres Betätigungselement 60 zur Sitzkissentiefeneinstellung angeordnet und am Sitzuntergestell 10 ist ein Rastbügel 62 zur Längseinstellung des Sitzes vorgesehen.

In Fig.6 ist in Draufsicht der nach oben abgewinkelte Längenabschnitt des Handlaufs 24 mit der nach oben gewandten Tastbahn 38 gezeigt, in welcher der Schalterblock 32 mit mehreren Schaltelementen 64,66,68 integriert ist. Dabei sind der mittlere untere Schalter 64 und der mittlere obere Schalter 66 als um die jeweilige Achse A schwenkbare Wippenschalter ausgebildet, welche zur Einstellung der Sitzkissenhärte des zugeordneten Sitzkissens 14 des Sitzteils 12 und der Rückenlehne 16 bzw. der sog. Lordosenstütze der Rückenlehne 16 dienen. Zwei seitlich über die Länge des Schalterblocks 32 verlaufende schmale Schalterelemente 68 sind über einen Steg 70 miteinander verbunden und gemeinsam um eine Achse W verschwenkbar. Hierdurch ist die Polsterhärte von Seitenwangen 72 (Fig. 1) des Sitzteils 12 und/oder der Rückenlehne 16 veränderbar. Der Schalterblock 32 steuert hier auf pneumatischem Weg - also über entsprechende Steuerventile - die entsprechenden Polster. Je nach Anwendung können die Steuerfunktionen der Betätigungselemente 26-36, 58-62 wahlweise auf pneumatische, hydraulische, elektrische oder mechanische Weise erfolgen.

## Patentansprüche

1. Bedienanordnung für einen Fahrzeugsitz mit einem länglichen Bedienfeld (24), das seitlich neben dem Sitzkissen (14) des Fahrzeugsitzes angeordnet ist und mehrere im Abstand voneinander angeordneten Betätigungselemente (26-36) aufweist, wobei die Betätigungselemente (26-36) durch Ertasten ihrer Lage oder Gestalt zu unterscheiden sind, wobei das Bedienfeld als ein der Länge nach abtastbarer Handlauf (24) ausgebildet ist, der sich über die überwiegende Länge des Sitzkissens (14) erstreckt, wobei alle Betätigungselemente (26-36) des Handlaufes (24) weitgehend in diesem versenkt angeordnet sind, und wobei der Handlauf (24) eine nach oben gewandte Tastbahn (38) und eine vom Sitzkissen (14) abgewandte seitliche Tastbahn (40) aufweist,
**dadurch gekennzeichnet, dass**
eines (26) der im Handlauf (24) angeordneten Betätigungselemente (26-36) über Eck in der nach oben gewandten und der seitlichen Tastbahn (38, 40) angeordnet ist.

2. Bedienanordnung nach Anspruch 1,
**dadurch gekennzeichnet, dass**
die nach oben gewandte Tastbahn (38) im Querschnitt gesehen seitlich geneigt verläuft, wodurch diese mit der seitlichen Tastbahn (40) einen stumpfen Winkel einschließt.

3. Bedienanordnung nach Anspruch 1 oder 2,
**dadurch gekennzeichnet, dass**
der Handlauf (24) im Übergangsbereich vom Sitzkissen (14) zur Rückenlehne (16) nach oben abgewinkelt ist.

4. Bedienanordnung nach Anspruch 1,
**dadurch gekennzeichnet, dass**
die nach oben gewandte Tastbahn (38) über ihre Länge eine im Wesentlichen konstante Breite aufweist.

5. Bedienanordnung nach Anspruch 1,
**dadurch gekennzeichnet, dass**
das griffgünstig im Handlauf (24) angeordnete Betätigungselement (26) an der Unterseite eine Eingriffsvertiefung (52) aufweist.

6. Bedienanordnung nach Anspruch 3,
**dadurch gekennzeichnet, dass**
im nach oben abgewinkelten Längenabschnitt der nach oben gewandten Tastbahn (38) ein Schalterblock (32) mit mehreren Schaltelementen (64, 66, 68) integriert ist.

7. Bedienanordnung nach Anspruch 1,
**dadurch gekennzeichnet, dass**
der Handlauf (24) von seinem seitlich des Sitzkissens (14) verlaufenden Längenbereich unter weicher Rundung in einen vor dem Sitzkissen (14) verlaufenden Längenbereich übergeht.

8. Bedienanordnung nach Anspruch 1,
**dadurch gekennzeichnet, dass**
die Bedienanordnung einem Schwingsitz eines Nutzfahrzeuges zugeordnet ist und ein Betätigungselement (30) für eine Schnellabsenkung des Schwingsitzes umfasst.

## Claims

1. Operating arrangement for a vehicle seat, with an oblong control panel (24) located at the side of the seat cushion (14) of the vehicle seat and supporting a number of operating elements (26-36) arranged at a distance from one another, wherein the operating elements (26-36) can be distinguished by feeling their position or shape, wherein the control panel is designed as a handrail (24) touchable along its length and extending along most of the length of the seat cushion (14), wherein all of the operating elements (26-36) of the handrail (24) are largely recessed therein and wherein the handrail (24) comprises an upward-facing touch track (38) and a lateral touch track (40) facing away from the seat cushion (14),
**characterised in that**
one (26) of the operating elements (26-36) in the handrail (24) is located across the corner in the upward-facing and lateral touch tracks (38, 40).

2. Operating arrangement according to claim 1,
**characterised in that**
the upward-facing touch track (38) is laterally inclined if viewed in cross-section, enclosing an obtuse angle with the lateral touch track (40).

3. Operating arrangement according to claim 1 or 2,
**characterised in that**
the handrail (24) is angled upwards in the transitional region from the seat cushion (14) to the backrest (16).

4. Operating arrangement according to claim 1,
**characterised in that**
the upward-facing touch track (38) has a substantially constant width along its length.

5. Operating arrangement according to claim 1,
**characterised in that**
the conveniently located operating element (26) in the handrail (24) has an engagement recess (52) on its underside.

6. Operating arrangement according to claim 3,
**characterised in that**
a switch block (32) with a plurality of switching elements (64, 66, 68) is integrated into the upward-angled section of the upward-facing touch track (38).

7. Operating arrangement according to claim 1,
**characterised in that**
the handrail (24) merges from its section extending at the side of the seat cushion (14) into a section extending in front of the seat cushion (14) with a gentle curvature.

8. Operating arrangement according to claim 1,
**characterised in that**
the operating arrangement is assigned to a suspension seat of a commercial vehicle and includes an operating element (30) for the fast lowering of the suspension seat.

## Revendications

1. Agencement de commande pour un siège de véhicule avec un panneau de commande (24) allongé, qui est disposé latéralement à proximité du coussin (14) du siège de véhicule et présente plusieurs éléments d'actionnement (26 - 36) disposés à distance les uns des autres, les éléments d'actionnement (26 - 36) se distinguent en palpant leur position ou leur forme, le panneau de commande étant formé sur sa longueur comme une main courante (24) pouvant être palpée, qui s'étend sur presque toute la longueur du coussin (14), tous les éléments d'actionnement (26 - 36) de la main courante (24) étant disposés essentiellement dans celle-ci de manière encastrée, et la main courante (24) présente une piste de sondage (38) orientée vers le haut et une piste de sondage (40) latérale opposée au coussin (14), **caractérisé en ce que** l'un (26) des éléments d'actionnement (26 - 36) disposé dans la main courante (24) est disposé en coin dans la piste de sondage orientée vers le haut et dans celle latérale (38, 40).

2. Agencement de commande selon la revendication 1, **caractérisé en ce que** la piste de sondage (38) orientée vers le haut, vue en coupe, s'étend latéralement en étant inclinée, celle-ci formant un angle obtus avec la piste de sondage (40) latérale.

3. Agencement de commande selon la revendication 1 ou 2, **caractérisé en ce que** la main courante (24) est coudée vers le haut dans une région de transition à partir du coussin (14) jusqu'au dossier (16).

4. Agencement de commande selon la revendication 1, **caractérisé en ce que** la piste de sondage (38) orientée vers le haut présente sur sa longueur une largeur essentiellement constante.

5. Agencement de commande selon la revendication 1, **caractérisé en ce que** l'élément d'actionnement (26) disposé dans la main courante (24) de manière ergonomique présente sur la face inférieure une rainure de préhension (52).

6. Agencement de commande selon la revendication 3, **caractérisé en ce que** dans le segment longitudinal coudé vers le haut de la piste de sondage orientée vers le haut (38) est intégré un bloc de commutateur (32) avec plusieurs éléments de commutation (64,66,68).

7. Agencement de commande selon la revendication 1, **caractérisé en ce que** la main courante (24) s'étendant de sa zone longitudinale côté coussin (14) en un angle arrondi se transforme en une zone longitudinale s'étendant avant le coussin (14).

8. Agencement de commande selon la revendication 1, **caractérisé en ce que** l'agencement de commande est associé à un siège pivotant d'un véhicule utilitaire et comprend un élément d'actionnement (30) pour un abaissement rapide du siège pivotant.
